# EUROPÄISCHE PATENTSCHRIFT

(11) **EP 3 433 202 B1**
(45) Veröffentlichungstag und Bekanntmachung des Hinweises auf die Patenterteilung: **22.04.2020**
(21) Anmeldenummer: 17719796.9
(22) Anmeldetag: 23.03.2017
(51) Int. Cl.: B66F 9/075, B66F 9/10

(54) **FAHRZEUG MIT SEITLICHER HUBEINRICHTUNG**
VEHICLE HAVING A LATERAL LIFTING DEVICE
ENGIN POURVU D'UN SYSTÈME DE LEVAGE LATÉRAL

(30) Priorität: 25.03.2016 AT 502522016
(43) Veröffentlichungstag der Anmeldung: 30.01.2019
(73) Patentinhaber: Bulmor Holding GmbH, 1110 Wien (AT)
(72) Erfinder: SCHÜTZENEDER, Herbert, 4322 Windhaag bei Perg (AT); SCHWEITZER, Peter, 4320 Windhaag bei Perg (AT)
(74) Vertreter: Burger, Hannes
(86) Internationale Anmeldenummer: PCT/AT2017/060071
(87) Internationale Veröffentlichungsnummer: WO 2017/161396

(56) Entgegenhaltungen:
- EP-A2- 2 487 067
- DE-A1- 19 958 086
- DE-B- 1 193 881
- US-A- 4 034 881

## Beschreibung

Die Erfindung betrifft ein Fahrzeug mit seitlicher Hubeinrichtung.

Aus der EP 0 870 727 B1 und der EP 2 518 010 B1 sind verschiedene Ausführungen von Seitenstaplem bekannt.

Die aus der EP 0 870 727 B1 und der EP 2 518 010 B1 bekannten Seitenstapler weisen den Nachteil auf, dass an der Hubeinrichtung aufgenommene Bauteile nur dann unter eine Auflageebene des Fahrzeuges abgesenkt werden können, wenn die Bauteile seitlich aus dem Bereich des Fahrzeuges ausgeschoben sind.

Aus der DE 199 58 086 A1, der EP 2 487 067 A2, der US 4 034 881 A und der DE 11 93 881 B sind weitere Ausführungsvarianten von Seitenstaplem bekannt.

Die DE 199 58 086 A1 offenbart den Oberbegriff des unabhängigen Anspruchs 1.

Aufgabe der vorliegenden Erfindung war es, die Nachteile des Standes der Technik zu überwinden und ein Fahrzeug zur Verfügung zu stellen, welches eine erhöhte Flexibilität aufweist. Diese Aufgabe wird durch eine Vorrichtung gemäß dem Anspruch 1 gelöst.

Das erfindungsgemäße Fahrzeug ist mit einer seitlichen Hubeinrichtung ausgestattet. Das Fahrzeug umfasst zumindest einen ersten Achsträger und einen zweiten Achsträger, wobei die beiden Achsträger mittels einer seitlich außermittig angeordneten Verbindungskonstruktion miteinander gekoppelt sind und wobei die Hubeinrichtung in einem Freiraum zwischen den beiden Achsträgern angeordnet ist. Die Hubeinrichtung umfasst zumindest einen ersten Hubmast mit einer ersten vertikal verschiebbaren Gabelhalteraufnahme und einen zweiten Hubmast mit einer zweiten vertikal verschiebbaren Gabelhalteraufnahme. Die beiden Hubmasten sind derart angesteuert, dass die Gabelhalteraufnahmen synchron zueinander verschiebbar sind.

Von Vorteil an der erfindungsgemäßen Ausbildung des Fahrzeuges ist, dass durch die Ausbildung von zwei Hubmasten der Freiraum zwischen den beiden Achsträgern eine höhere Länge aufweisen kann als bei herkömmlichen Seitenstaplern. Insbesondere kann dadurch die lichte Länge des Freiraums so groß gewählt werden, dass die zu befördernden Bauteile kürzer als die lichte Länge des Freiraumes sind. Dadurch können die zu befördernden Bauteile auch dann abgesenkt werden, wenn sie sich innerhalb der Breite des Fahrzeuges befinden, wodurch das Laden der untersten Regalebene von nahe zueinander gebauten Regalen erleichtert wird. Darüber hinaus kann durch die beiden Hubmasten eine höhere Last aufgenommen werden. Insbesondere wenn die beiden Hubmasten zueinander synchronisiert sind, kann ein Gabelhalter gleichmäßig von den beiden Hubmasten bewegt werden.

Weiters kann es zweckmäßig sein, wenn die beiden Hubmasten horizontal in Querrichtung des Fahrzeuges verschiebbar sind. Von Vorteil ist hierbei, dass durch diese Maßnahme das zu transportierende Bauteil seitlich aus der Breite des Fahrzeuges hinausgeschoben werden kann und dadurch in einem Lagerregal abgelegt werden kann. Insbesondere kann dabei vorgesehen sein, dass die Hubmasten zwischen einer Ruhestellung und einer ausgefahrenen Stellung verschiebbar sind. In der Ruhestellung befinden sich die Traggabeln des Gabelhalters innerhalb der Breite des Fahrzeuges und die Hubmasten sind möglichst nahe zur Verbindungkonstruktion verschoben. In der ausgefahrenen Stellung der Hubmasten stehen die Traggabeln des Gabelhalters seitlich gegenüber der Breite des Fahrzeuges vor und die Hubmasten sind an die der Verbindungskonstruktion gegenüberliegende Seite des Fahrzeuges verschoben.

Ferner kann vorgesehen sein, dass die beiden Hubmasten mittels einer Verstrebung aneinander abgestützt sind. Von Vorteil ist hierbei, dass durch diese Maßnahme die Stabilität der Hubeinrichtung verbessert werden kann, wodurch auch die Gesamtstabilität des Fahrzeuges verbessert werden kann.

Erfindungsgemäß wird es vorgesehen, dass der erste Hubmast an einer dem ersten Achsträger zugewandten ersten Seite eine erste Führungseinheit aufweist und dass der zweite Hubmast an einer dem zweiten Achsträger zugewandten zweiten Seite eine zweite Führungseinheit aufweist. Von Vorteil ist hierbei, dass durch diese Maßnahme die beiden Hubmasten, welche zur Hubeinrichtung zusammengefügt sind, im Freiraum des Fahrzeuges verschiebbar aufgenommen sein können. Insbesondere kann dadurch die Möglichkeit zur Verschiebung des Hubmastens zwischen Ruhestellung und ausgefahrener Stellung erreicht werden.

Erfindungsgemäß wird es weiter vorgesehen, dass die beiden Führungseinheiten jeweils zumindest zwei horizontal zueinander beabstandete Hauptführungsrollen mit horizontal ausgerichteter Rotationsachse aufweisen, welche Hauptführungsrollen jeweils mit einer in den Achsträgern angeordneten Führungsschiene zusammenwirken, wobei die Hauptführungsrollen zur Aufnahme der auf die Hubeinrichtung wirkenden Last und des auf die Hubeinrichtung wirkenden Drehmomentes ausgebildet sind, und dass die beiden Führungseinheiten jeweils zumindest ein in horizontaler Längsrichtung des Fahrzeuges wirkendes Stabilisationsmodul aufweisen, welches zur horizontalen Positionierung der Hauptführungsrollen in der Führungsschiene dient. Insbesondere durch das Stabilitätsmodul kann erreicht werden, dass die Gesamtsteifigkeit des Fahrzeuges erhöht werden kann. Dies kann besonders dann notwendig sein, wenn das Fahrzeug einen Freiraum mit großer lichter Weite aufweist und somit die Verbindungskonstruktion eine große Länge aufweist, wodurch die Grundstabilität des Fahrzeuges vermindert ist.

Gemäß einer Weiterbildung ist es möglich, dass das Stabilisationsmodul eine Stabilisationsführungsrolle mit vertikal ausgerichteter Rotationsachse aufweist, welche Stabilisationsführungsrolle mit einer in den Achsträgern angeordneten Stabilisationsführungsschiene zusammenwirkt. Von Vorteil ist hierbei, dass eine derartige Stabilisationsführungsrolle einerseits hohe Kräfte aufnehmen kann und darüber hinaus im Dauerbetrieb sehr verschleiß- und wartungsarm ist.

Alternativ dazu kann vorgesehen sein, dass das Stabilisationsmodul zwei Gleitelemente aufweist, welche mit der in den Achsträgern angeordneten Stabilisationsführungsschiene zusammenwirken. Von Vorteil an derartigen Gleitelementen ist, dass sie kostengünstig sind und einfach am Stabilisationsmodul zu verbauen sind.

Darüber hinaus kann vorgesehen sein, dass zwei Antriebseinheiten ausgebildet sind, welche zur horizontalen Verschiebung der Hubmasten in Querrichtung des Fahrzeuges dienen. Der Einsatz von zwei Antriebseinheiten, welche bevorzugt einander gegenüberliegend an der Hubeinrichtung angeordnet sind, ist jener, dass die Hubeinrichtung eine erhöhte Verwindungssteifigkeit aufweist bzw. dass beide Hubmasten gleichmäßig aus- bzw. eingefahren werden können.

Weiters kann vorgesehen sein, dass die Antriebseinheiten jeweils zumindest einen Hydraulikzylinder umfassen. Von Vorteil ist hierbei, dass Hydraulikzylinder möglichst wartungsarm und einfach aufgebaut sind und darüber hinaus bei möglichst hoher Verfahrgeschwindigkeit eine ausreichende Schubkraft aufbringen können.

Gemäß einer besonderen Ausprägung ist es möglich, dass ein Gabelhalter ausgebildet ist, welcher an einer ersten Seite mit der ersten Gabelhalteraufnahme des ersten Hubmast gekoppelt ist und an einer zweiten Seite mit der zweiten Gabelhalteraufnahme des zweiten Hubmast gekoppelt ist. Von Vorteil ist hierbei, dass ein derartig ausgebildeter Gabelhalter, welcher mit beiden Hubmasten gekoppelt ist, eine hohe Gesamtlänge aufweisen kann und somit beispielsweise zur Aufnahme von mehreren rollenförmigen zu transportierenden Bauteilen ausgebildet sein kann oder zur Aufnahme von langen zu transportierenden Bauteilen ausgebildet sein kann.

Entsprechend einer vorteilhaften Weiterbildung kann vorgesehen sein, dass die beiden Hubmasten jeweils ein teleskopierbares Laufschienensystem aufweisen, an welchem jeweils die Gabelhalteraufnahme angeordnet ist. Durch diese Maßnahme kann erreicht werden, dass die beiden Hubmasten eine erhöhte Flexibilität bzw. einen erhöhten Hub aufweisen können.

Insbesondere kann es vorteilhaft sein, wenn das teleskopierbare Laufschienensystem des Hubmasten ein erstes Schienenpaar mit zwei U-Förmig ausgebildeten Einzelschienen umfasst, wobei die offenen Enden der beiden U-Förmig ausgebildeten Einzelschienen einander gegenüberliegend angeordnet sind und wobei die Gabelhalteraufnahme an einem Laufwagen ausgebildet ist, welcher zumindest vier Führungsrollen aufweist, wobei jeweils zwei Führungsrollen paarweise in einer der U-Förmig ausgebildeten Einzelschienen geführt sind und wobei die U-Förmig ausgebildeten Einzelschienen in einem zweiten Schienenpaar verschiebbar geführt sind. Ein derart aufgebautes Laufschienensystem kann eine erhöhte Stabilität aufweisen, wodurch die Positioniergenauigkeit des zu transportierenden Bauteils besonders in angehobener Stellung verbessert werden kann.

Ferner kann vorgesehen sein, dass der erste Achsträger ein erstes Radpaar und der zweite Achsträger ein zweites Radpaar aufweist, wobei beide Radpaare lenkbar sind. Von Vorteil ist hierbei, dass durch die Möglichkeit zum Lenken beider Radpaare der Wendekreis des Fahrzeuges verkleinert werden kann und somit die Flexibilität des Fahrzeuges erhöht werden kann. Dies kann insbesondere bei der Verwendung des Fahrzeuges in engen Regalgassen notwendig sein.

Darüber hinaus kann vorgesehen sein, dass die Verbindungskonstruktion am seitlichen Rand der Achsträger angeordnet ist, sodass das Fahrzeug in Draufsicht U-Förmig ausgebildet ist, wobei die beiden parallel zueinander liegenden Schenkel des U-Förmig ausgebildeten Fahrzeuges durch die Achsträger gebildet sind und der Freiraum zur Aufnahme der Hubeinrichtung an der offenen Seite der U-Förmigen Anordnung ausgebildet ist. Von Vorteil ist hierbei, dass durch diese Maßnahmen auch die Breite des Freiraumes möglichst groß sein kann und somit die Traggabeln des Gabelhalters eine möglichst große Länge aufweisen können.

Vorteilhaft ist auch eine Ausprägung, gemäß welcher vorgesehen sein kann, dass die Verbindungskonstruktion teleskopierbar ausgebildet ist, und dadurch eine Länge des Fahrzeuges variierbar ist. Insbesondere kann dadurch erreicht werden, dass die Länge des Fahrzeuges an die jeweiligen Einsatzerfordernisse, insbesondere an die jeweiligen zu transportierenden Bauteile bzw. an die Platzverhältnisse im Einsatzbereich des Fahrzeuges angepasst werden kann. Eine derartige Teleskopierfunktion der Verbindungskonstruktion kann beispielsweise durch ineinander verschiebbare Profile erreicht werden. Zusätzlich kann beispielsweise ein Hydraulikzylinder vorgesehen sein, mittels welchem die Länge des Fahrzeuges aktiv verstellt werden kann. Natürlich muss bei einer teleskopierbaren Verbindungskonstruktion auch die Hubeinrichtung, beispielsweise im Bereich der Verstrebung teleskopierbar sein.

Gemäß einer Weiterbildung ist es möglich, dass eine Fahrerkabine ausgebildet ist, welche mittig bezüglich einer Längsachse des Fahrzeuges am ersten Achsträger angeordnet ist. Von Vorteil ist hierbei, dass durch eine mittig angeordnete Fahrerkabine die Sicht auf das zu transportierende Bauteil verbessert werden kann.

Weiters kann vorgesehen sein, dass eine lichte Länge des Freiraumes zwischen 3m und 20m, insbesondere zwischen 4m und 18m, bevorzugt zwischen 7m und 15m beträgt. Von Vorteil ist hierbei, dass ein Fahrzeug mit einer derartig großen Lichte Länge des Freiraums für verschiedenste Einsatzzwecke geeignet ist und eine große Anzahl von verschiedensten Bauteilen von der Hubeinrichtung aufgenommen werden können, wobei die Bauteile auch innerhalb des Fahrzeuges bis auf den Boden abgesenkt werden können.

Darüber hinaus kann vorgesehen sein, dass die beiden Achsträger und die Verbindungskonstruktion modular aufgebaut und jeweils als eigene Bauteilgruppe ausgebildet sind, wobei die Verbindungskonstruktion an einer ersten Seite mit dem ersten Achsträger gekoppelt ist, wodurch eine erste Verbindungsstelle ausgebildet ist, und an einer zweiten Seite mit dem zweiten Achsträger gekoppelt ist, wodurch eine zweite Verbindungsstelle ausgebildet ist. Von Vorteil an dieser Ausbildung des Fahrzeuges ist, dass durch den modularen Aufbau verschieden lange Fahrzeuge zur Verfügung gestellt werden können, wobei die beiden Achsträger nicht umkonstruiert werden müssen oder nur geringfügig angepasst werden müssen. Die verschiedenen Längen des Fahrzeuges können durch Variieren der Länge der Verbindungskonstruktion erreicht werden. Dadurch können zum einen die Herstellkosten für ein derartiges Fahrzeug gesenkt werden und zum anderen kann aufgrund der Standardisierung gewisser Bauteile die Qualität des Fahrzeuges verbessert werden.

Ferner kann es zweckmäßig sein, wenn im Bereich der Verbindungskonstruktion ein Sensor, insbesondere in Form von Dehnmessstreifen, angeordnet ist, welcher ein in die Verbindungskonstruktion eingeleitetes Drehmoment erfasst, welches Drehmoment durch neigen eines der beiden Achsträger ausgleichbar ist. Von Vorteil ist hierbei, dass dadurch in der Verbindungskonstruktion auftretende Spannungen ausgeglichen werden können. Dies kann insbesondere bei einem Betrieb des Fahrzeuges auf einem unebenen Untergrund notwendig sein.

Alternativ dazu oder zusätzlich kann vorgesehen sein, dass sowohl am ersten als auch am zweiten Achsträger ein Neigungssensor angeordnet ist, mittels welchem die aktuelle Neigung der Achsträger gemessen werden kann, wobei eine Regelung derart festgelegt sein kann, in welcher eine Differenz zwischen Neigungsunterschieden der Achsträger durch Verstellung der Radpaare ausgeglichen werden kann. Von Vorteil ist hierbei, dass dadurch in der Verbindungskonstruktion auftretende Spannungen ausgeglichen werden können. Dies kann insbesondere bei einem Betrieb des Fahrzeuges auf einem unebenen Untergrund notwendig sein.

Ferner kann vorgesehen sein, dass am ersten Achsträger und/oder am zweiten Achsträger zumindest eine ausfahrbare Stütze angeordnet ist, wobei die Stütze insbesondere seitlich des Achsträgers nahe dem Freiraum angeordnet ist. Von Vorteil ist hierbei, dass eine Ausfahrbare Stütze die Bereifung des Fahrzeuges an der Seite des zu transportierenden Bauteiles entlasten kann und dadurch die Stabilität des Fahrzeuges erhöht werden kann. Die Stütze kann insbesondere bei stehendem Fahrzeug ausgefahren werden. Weiters kann es auch zweckmäßig sein, wenn mehrere Stüzen ausgebildet sind. Die Stützen sollten möglichst nah am seitlichen Rand des Fahrzeuges angeordnet sein, um eine möglichst gute Abstüztwirkung erzielen zu können.

Weiters kann es zweckmäßig sein, wenn die Achsträger jeweils an einer Verbindungsebene mit der Verbindungskonstruktion gekoppelt sind. Von Vorteil ist hierbei, dass eine derartige Verbindungsebene einfach ausgebildet werden kann, um den definierten Bereich zur Verbindung der Achsträger mit der Verbindungskonstruktion zu erreichen.

Ferner kann vorgesehen sein, dass die Verbindungsebene durch zumindest eine Verbindungsplatte ausgebildet ist. Von Vorteil ist hierbei, dass eine Verbindungsplatte ideal zur Aufnahme von Befestigungsmittel ausgebildet ist und darüber hinaus mittels der Verbindungsplatte die Verbindungskonstruktion gut relativ zu den Achsträgern positionierbar ist.

Darüber hinaus kann vorgesehen sein, dass die Verbindungskonstruktion und die Achsträger mittels einer thermischen Fügeverbindung, vorzugsweise einer Schweißverbindung, miteinander verbunden sind. Von Vorteil ist hierbei, dass eine thermische Fügeverbindung einfach herzustellen ist und darüber hinaus eine hohe Festigkeit aufweist.

Alternativ dazu kann vorgesehen sein, dass die Verbindungskonstruktion und die Achsträger mittels zumindest einem Befestigungsmittel, bevorzugt einer Schraube, miteinander verbunden sind. Von Vorteil ist hierbei, dass eine derartige Verbindung zerstörungsfrei lösbar ist und somit bedarfsweise ein bereits im Einsatz befindliches Fahrzeug mit einer neuen Verbindungskonstruktion versehen werden kann und somit die Länge des Fahrzeuges im Nachhinein verändert werden kann.

Gemäß einer Weiterbildung ist es möglich, dass in der Verbindungsstelle ein Zentrierbolzen mit einer damit korrespondierenden Bolzenaufnahme zusammenwirkt, wodurch der erste Achsträger relativ zur Verbindungskonstruktion positioniert ist und/oder der zweite Achsträger relativ zur Verbindungskonstruktion positioniert ist. Von Vorteil ist hierbei, dass die Positionsgenauigkeit zwischen Verbindungskonstruktion und Achsträger verbessert werden kann. Weiters wird durch diese Maßnahme der Zusammenbau zwischen Verbindungskonstruktion und Achsträger erleichtert. Darüber hinaus können die Zentrierbolzen zur Kraftübertragung zwischen Verbindungskonstruktion und Achsträger dienen.

Vorteilhaft ist auch eine Ausprägung, gemäß welcher vorgesehen sein kann, dass die Verbindungskonstruktion als Fachwerk ausgebildet ist. Von Vorteil ist hierbei, dass eine derartig ausgebildete Verbindungskonstruktion bei möglichst geringem Gewicht eine möglichst große Steifigkeit aufweisen kann.

Darüber hinaus kann vorgesehen sein, dass zwischen dem ersten Achsträger und dem zweiten Achsträger verlaufende Versorgungsleitungen, wie etwa Stromleitungen und/oder Hydraulikleitungen im Bereich der Verbindungskonstruktion geführt sind, wobei die Versorgungsleitungen im Bereich der Verbindungsstelle mittels einer Kupplung gekoppelt sind. Von Vorteil ist hierbei, dass die Versorgungsleitungen beim Zusammenbau der Verbindungskonstruktion mit den Achsträgern einfach gekoppelt werden können bzw. dass bei einer etwaigen Demontage des Verbindungsbauteils und der Achsträger die Versorgungsleitungen einfach getrennt werden können.

Weiters kann eine Fahrzeugflotte mit zumindest zwei Fahrzeugen mit seitlicher Hubeinrichtung vorgesehen sein, wobei beide Fahrzeuge nach der obigen Beschreibung ausgebildet sind, und wobei der erste Achsträger und der zweite Achsträger beider Fahrzeuge ident ausgebildet sind und wobei die Verbindungskonstruktion der beiden Fahrzeuge eine unterschiedliche Länge aufweist. Von Vorteil ist hierbei, dass eine derartige Fahrzeugflotte effizient und kostengünstig herzustellen ist.

Weiters kann beim Herstellverfahren zum Herstellen eines Fahrzeuges mit seitlicher Hubeinrichtung vorgesehen sein, dass das Herstellverfahren folgende Verfahrensschritte umfasst:
- Bereitstellen eines ersten Achsträgers;
- Bereitstellen eines zweiten Achsträgers;
- Bereitstellen einer Verbindungskonstruktion;
- Bereitstellen der Hubeinrichtung;
- Verbinden der Verbindungskonstruktion mit dem ersten Achsträger und dem zweiten Achsträger;
- Einbauen der Hubeinrichtung.

Von Vorteil an dem erfindungsgemäßen Verfahren ist, dass durch die definierten Verfahrensschritte die Qualität des Fahrzeuges verbessert werden kann und gleichzeitig die Produktivität beim Zusammenbau des Fahrzeuges gesteigert werden kann.

Die Ausrichtung der beiden Hubmasten ist im Wesentlichen vertikal. Der Einfachheit halber wird in diesem Dokument nur von einer vertikalen Verschiebbarkeit der Gabelhalteraufnahme bzw. von einer vertikalen Ausrichtung der Laufschienen eines Hubmasten gesprochen. Es ist jedoch auch möglich, dass die Hubmasten in deren Winkel verstellbar ausgebildet sind, bzw. dass da komplette Fahrzeug seitlich geneigt werden kann. Eine Abweichung von der Vertikalen aufgrund der Fahrzeugneigung oder aufgrund der Neigung des Hubmastens wird ebenfalls als im Wesentlichen vertikal gesehen und ist daher im Schutzumfang mitumfasst. Wenn in diesem Dokument von vertikal gesprochen wird, so sind daher auch aufgrund der Fahrzeugneigung hervorgerufene Abweichungen der absoluten Vertikalen mitgemeint. Gleich wie hier beschrieben verhält es sich mit dem Begriff horizontale Ausrichtung, bei welchem auch geringe, aufgrund der Neigung des Fahrzeuges, Winkelabweichungen mitumfasst sind.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung eines ersten Ausführungsbeispiels eines Seitenstaplers von schräg oben;
- Fig. 2: eine weitere perspektivische Darstellung des ersten Ausführungsbeispiels des Seitenstaplers von schräg oben;
- Fig. 3: das erste Ausführungsbeispiel des Seitenstaplers in einer Draufsicht;
- Fig. 4: eine perspektivische Ansicht einer Hubeinrichtung des ersten Ausführungsbeispiels des Seitenstaplers;
- Fig. 5: das erste Ausführungsbeispiel des Seitenstaplers in einer perspektivischen Ansicht von schräg unten;
- Fig. 6: eine schematische Darstellung eines Ausführungsbeispiels der Verbindung zwischen Achsträger und Verbindungskonstruktion in einer Draufsicht;
- Fig. 7: eine schematische Darstellung eines Ausführungsbeispiels der Führungseinheit der Hubeinrichtung in einer Seitenansicht;
- Fig. 8: eine perspektivische Darstellung eines zweiten Ausführungsbeispiels des Seitenstaplers von schräg oben;
- Fig. 9: eine perspektivische Darstellung eines Ausführungsbeispiels einer Traggabel;
- Fig. 10: eine perspektivische Darstellung eines dritten Ausführungsbeispiels des Seitenstaplers von schräg oben.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

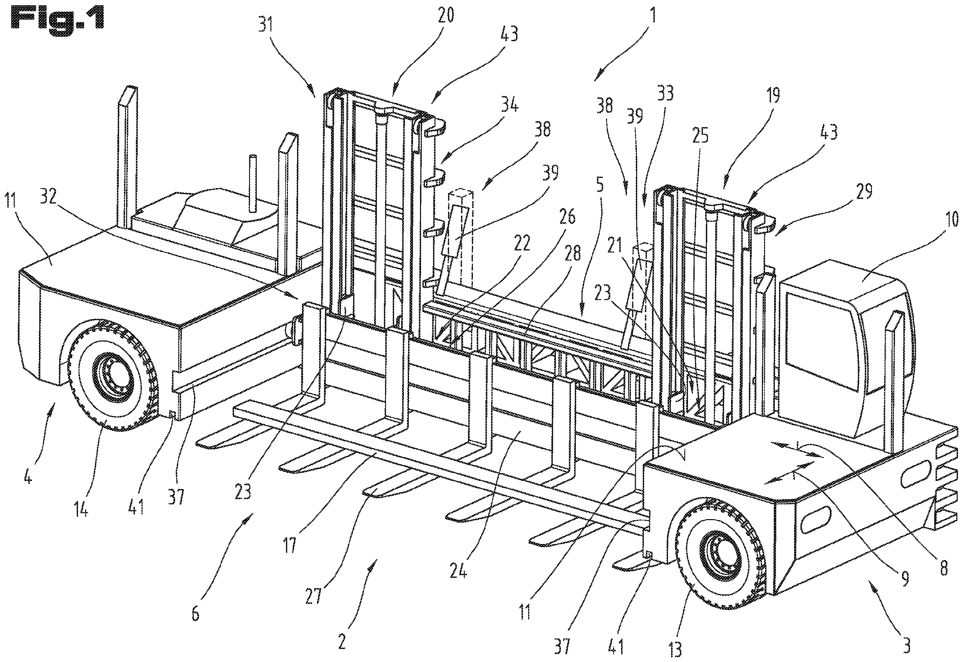

Fig. 1 zeigt eine perspektivische Ansicht eines Fahrzeuges 1 mit seitlicher Hubeinrichtung 2. Ein derartiges Fahrzeug 1 wird in der Fachsprache auch als Seitenstapler bezeichnet.

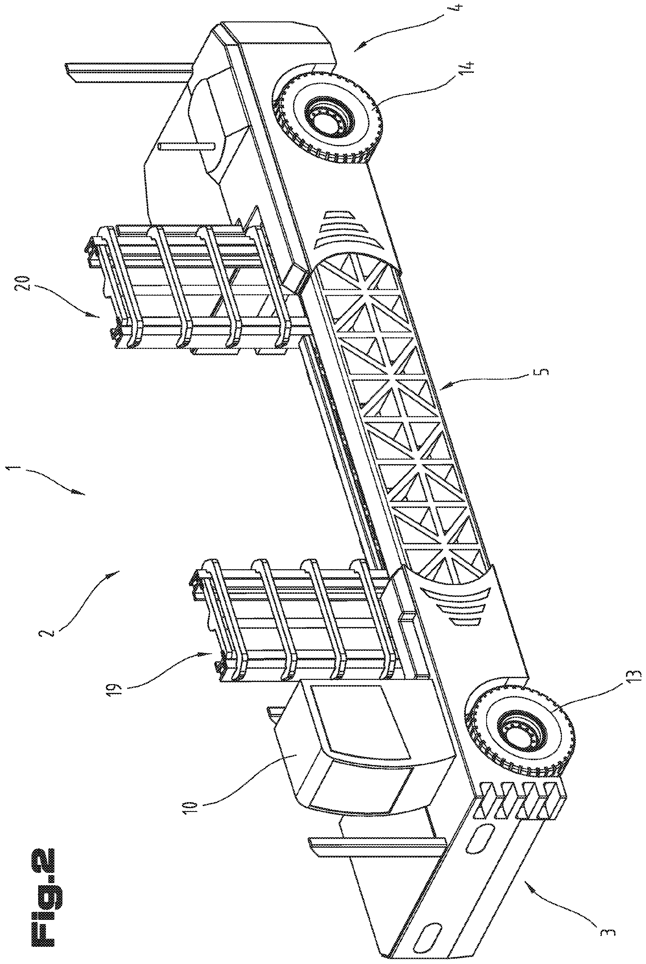

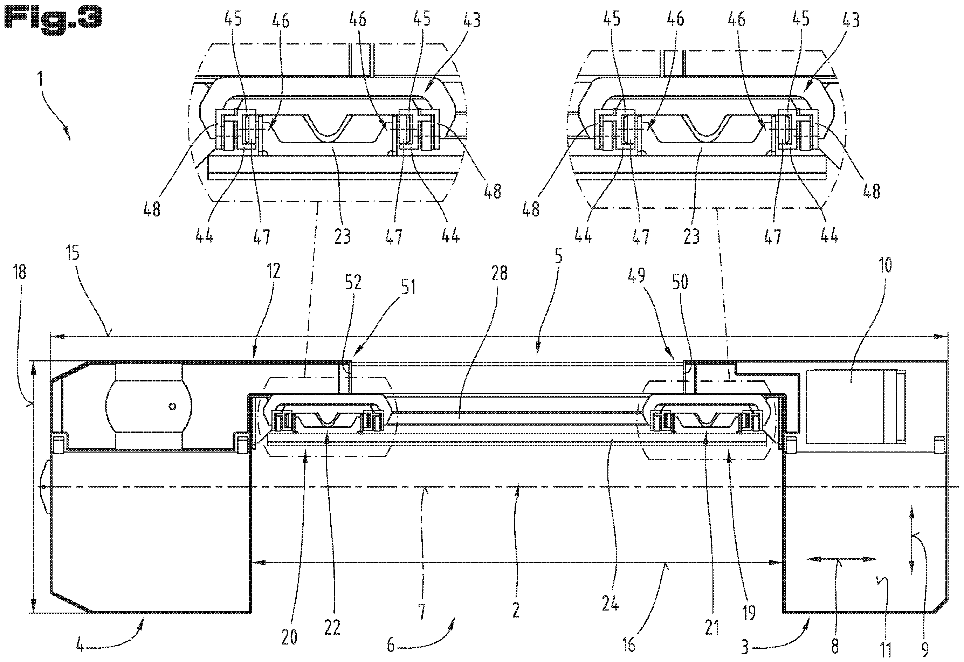

In den Figuren 2 und 3 ist das Fahrzeug 1 in weiteren Darstellungen gezeigt.

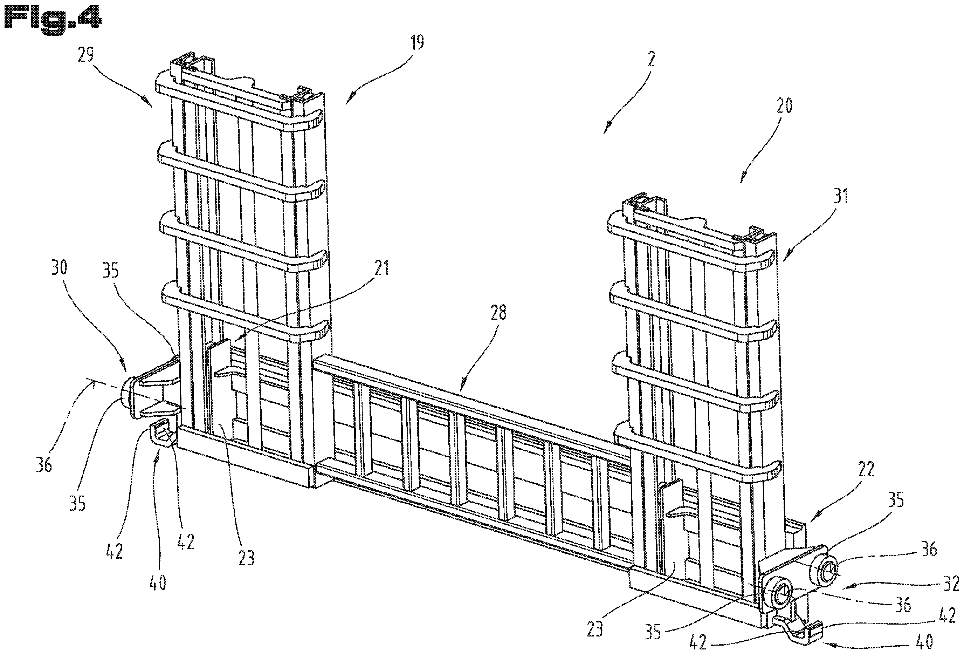

In der Figur 4 ist die Hubeinrichtung 2 in einer perspektivischen Ansicht dargestellt.

Die folgende Beschreibung basiert auf einer Zusammenschau der verschiedenen Darstellungen des ersten Ausführungsbeispiels des Fahrzeuges 1 in den Figuren 1 bis 4, wobei nicht in jeder einzelnen der Figuren alle Bauteilnummerierungen eingetragen sind, sondern zur Übersichtlichkeit die Bauteile nur in jenen Figuren bezeichnet wurden in denen Sie besonders gut ersichtlich sind. Es wird davon ausgegangen, dass es dem Fachmann klar ist, wie verschiedene Ansichten aus verschiedenen Blickwinkeln miteinander zu kombinieren sind.

Das Fahrzeug 1 weist einen ersten Achsträger 3 und einen zweiten Achsträger 4 auf, welche durch eine Verbindungskonstruktion 5 miteinander gekoppelt sind. Insbesondere sind die beiden Achsträger 3, 4 und die Verbindungskonstruktion 5 derart miteinander gekoppelt, dass sich an einer Seite des Fahrzeuges 1 ein Freiraum 6 ergibt. In der Draufsicht nach Fig. 3 gesehen, hat das Fahrzeug 1 eine U-förmige Formgebung, wobei die beiden parallelen Schenkeln des U durch den ersten Achsträger 3 und den zweiten Achsträger 4 gebildet sind.

Um den Freiraum 6 möglichst groß zu gestalten, ist die Verbindungskonstruktion 5 in Draufsicht auf das Fahrzeug 1 gesehen seitlich außermittig angeordnet. In einer bevorzugten Ausführungsvariante ist die Verbindungskonstruktion 5 möglichst weit am Rand 12 der Achsträger 3, 4 angeordnet, sodass der Freiraum 6 möglichst groß ist. Mit anderen Worten ausgedrückt ist in Draufsicht gesehen, die Verbindungskonstruktion 5 zur mittig liegenden Längsachse 7 des Fahrzeuges 1 möglichst weit beabstandet.

Ein weiterer Faktor für die Größe des Freiraumes 6 ist die Breite der Verbindungskonstruktion 5. Je schmäler die Verbindungskonstruktion 5 ausgeführt ist, desto breiter kann der Freiraum 6 sein. Die Verbindungskonstruktion 5 sollte daher bei möglichst geringen Abmaßen eine möglichst hohe Formsteifigkeit und Verwindungssteifigkeit aufweisen. Dies kann beispielsweise dadurch erreicht werden, dass die Verbindungskonstruktion 5 in Form eines Fachwerkes ausgeführt ist. Hierzu können einzelne Bleche miteinander verschweißt sein, um die Verbindungskonstruktion 5 zu formen.

In einer Alternativvariante kann auch vorgesehen sein, dass die Verbindungskonstruktion 5 in einer Profilbauweise aus verschiedenen einzelnen Blechen zusammengeschweißt ist, oder dass ein Blech zu einem Rahmenprofil gebogen ist.

Auch die Achsträger 3, 4 können als Blechkonstruktion ausgeführt sein, wobei einzelne Bleche zum jeweiligen Achsträger 3, 4 zusammengeschweißt sein können. Insbesondere kann vorgesehen sein, dass die Achsträger 3, 4 und die Verbindungskonstruktion 5 jeweils als eigene selbständige Schweißkonstruktionen vorgefertigt werden und in einem weiteren Montageschritt zusammengefügt werden.

Als Längsrichtung 8 des Fahrzeuges 1 wird jene Richtung definiert, welche parallel zur Fortbewegungsrichtung des Fahrzeuges 1 liegt. In der Draufsicht gesehen, ist im Winkel von 90° zur Längsrichtung 8 des Fahrzeuges 1 die Querrichtung 9 des Fahrzeuges 1 ausgebildet.

Vorzugsweise kann vorgesehen sein, dass das Fahrzeug 1 eine Hauptbewegungsrichtung aufweist, wobei diese derart gewählt ist, dass der erste Achsträger 3 bei vorwärtsfahrt vorne ist, sodass der erste Achsträger 3 auch als vorderer Achsträger bezeichnet werden kann. Der zweite Achsträger 4 kann analog dazu als hinterer Achsträger bezeichnet werden.

Weiters kann vorgesehen sein, dass eine Fahrerkabine 10 am Fahrzeug 1 angeordnet ist, wobei die Fahrerkabine 10 vorzugsweise am ersten Achsträger 3 angeordnet ist. In der Ausführungsvariante des Fahrzeuges 1 nach den Fig. 1 bis 3 ist die Fahrerkabine 10 in Fahrtrichtung gesehen, an der linken Seite des Fahrzeuges 1 angeordnet. Mit anderen Worten ausgedrückt, kann vorgesehen sein, dass die Fahrerkabine 10 an derselben Seite des Fahrzeuges 1 angeordnet ist, wie die Verbindungskonstruktion 5.

Weiters kann vorgesehen sein, dass am ersten Achsträger 3 und/oder am zweiten Achsträger 4 eine Auflageebene 11 ausgebildet ist, an welcher von der Hubeinrichtung 2 aufgenommene längliche Gegenstände abgelegt werden können. Die Auflageebene 11 kann durch die beschriebene Anordnung der Fahrerkabine 10 und der Verbindungskonstruktion 5 gebildet sein.

Der erste Achsträger 3 umfasst vorzugsweise ein erstes Radpaar 13 und der zweite Achsträger 4 umfasst vorzugsweise ein zweites Radpaar 14. Die Radpaare 13, 14 sind vorzugsweise an einer Pendelachse angeordnet. Alternativ dazu kann auch vorgesehen sein, dass die Radpaare 13, 14 jeweils eine Einzelradaufhängung aufweisen. Durch Verstellung des Abstandes der Schweißkonstruktion der Achsträger 3, 4 relativ zu den Radpaaren 13, 14 kann eine Winkelneigung der Achsträger 3, 4 und somit der Hubeinrichtung 2 einstellbar sein. Dies kann insbesondere dadurch erreicht werden, dass an einer Seite des jeweiligen Radpaares 13, 14 eine Verstellvorrichtung, wie etwa ein Hydraulikzylinder angeordnet ist, mit welcher die eine Seite des Achsträger 3, 4 relativ zum Rad angehoben werden kann und dadurch eine Neigung einstellbar ist.

In einer Weiterbildung kann auch vorgesehen sein, dass im Bereich der Verbindungskonstruktion 5 ein Sensor angeordnet ist, welcher die Verwindung der Verbindungskonstruktion 5 bzw. das an der Verbindungskonstruktion 5 auftretende Drehmoment misst. Mithilfe der Sensordaten kann mittels der einzelnen Verstellvorrichtungen der Radpaare 13, 14 eine übermäßige Verwindung der Verbindungskonstruktion 5 ausgeglichen werden. Dies kann insbesondere notwendig sein, wenn die Verbindungskonstruktion 5 eine große Länge aufweist und dadurch eine nur geringe Torsionssteifigkeit aufweist und wenn gleichzeitig der Untergrund an welchem das Fahrzeug 1 betrieben werden soll sehr uneben ist.

Insbesondere kann vorgesehen sein, dass das erste Radpaar 13 gelenkt ist, um das Fahrzeug 1 steuern zu können. Weiters ist es auch denkbar, dass alternativ dazu oder zusätzlich dazu das zweite Radpaar 14 gelenkt ist. Werden sowohl das erste Radpaar 13 als auch das zweite Radpaar 14 gelenkt, so kann dadurch der mögliche Kurvenradius des Fahrzeuges 1 verkleinert werden.

Weiters kann vorgesehen sein, dass zur Erhöhung der möglichen Nutzlast des Fahrzeuges 1 am ersten Achsträger 3 und/oder am zweiten Achsträger 4 ein weiteres Radpaar angeordnet ist.

Die Achsträger 3, 4 können in Draufsicht gesehen, in etwa einen rechteckigen Querschnitt aufweisen. Insbesondere kann vorgesehen sein, dass der erste Achsträger 3 zur Aufnahme der Fahrerkabine 10 dient und der zweite Achsträger 4 zur Aufnahme eines Antriebsmotors dient. Das Fahrzeug 1 kann mittels einem Verbrennungsmotor, wie etwa einem Dieselmotor oder einem Gasmotor, angetrieben sein, welche vorzugsweise im zweiten Achsträger 4 angeordnet sind. Dieser Verbrennungsmotor kann beispielsweise an einen Generator gekoppelt sein, wobei sämtliche Stell- und Fahrantriebe des Fahrzeuges 1 in Form eines Elektromotors ausgebildet sein können.

Alternativ dazu kann vorgesehen sein, dass der Verbrennungsmotor an ein Hydraulikaggregat gekoppelt ist und dass sämtliche Stellantriebe bzw. Fahrantriebe in Form eines Hydraulikmotors ausgebildet sind.

In wieder einer anderen Ausführungsvariante kann vorgesehen sein, dass sämtliche Stellantriebe bzw. Fahrantriebe in Form eines Elektromotors ausgebildet sind, wobei die Antriebsenergie nicht von einem Generator, sondern von einer Batterie bereitgestellt ist.

Der Abstand bzw. die Anordnung des ersten Achsträgers 3 und des zweiten Achsträgers 4 zueinander bestimmt nicht nur die Länge 15 des Fahrzeuges 1 sondern auch die Lichte Länge 16 des Freiraumes 6.

Insbesondere kann vorgesehen sein, dass ähnliche Fahrzeuge 1 mit unterschiedlicher Länge 15 hergestellt werden können, wobei die Achsträger 3, 4 bei Fahrzeugen mit unterschiedlicher Länge 15 gleich aufgebaut sind und nur die Länge der Verbindungskonstruktion 5 variiert wird.

In einigen Anwendungsfällen kann es notwendig sein, dass die lichte Länge 16 des Freiraumes 6 größer ist als eine Länge eines zu transportierenden Bauteiles 17. Dadurch kann erreicht werden, dass das zu transportierende Bauteil 17 von der Hubeinrichtung 2, welche zwischen den beiden Achsträgern 3, 4 angeordnet ist, innerhalb einer Breite 18 des Fahrzeuges 1 bis nahezu auf den Untergrund abgesenkt werden kann. Dadurch ist es möglich, dass die unterste Etage eines Regals vom Fahrzeug 1 beladen wird, ohne dass dabei das zu transportierende Bauteil 17 vorher seitlich aus dem Fahrzeug 1 ausgeschoben wird. Dies bringt insbesondere den Vorteil mit sich, dass das Fahrzeug 1 auch in engen Regalgängen, welche kaum breiter sind als die Breite 18 des Fahrzeuges 1 eine untere Regalebene beladen kann.

Um die lichte Länge 16 des Freiraumes 6 möglichst groß gestalten zu können, ist vorgesehen, dass das Fahrzeug 1 einen ersten Hubmast 19 und einen zweiten Hubmast 20 aufweist, welche beabstandet zueinander angeordnet sind und welche eine erste Gabelhalteraufnahme 21 bzw. eine zweite Gabelhalteraufnahme 22 aufweisen. Die Gabelhalteraufnahmen 21, 22 sind insbesondere an einem Laufwagen 23 ausgebildet, welche jeweils im Hubmast 19, 20 aufgenommen ist und welcher in vertikaler Richtung relativ zu den Achsträgern 3, 4 verschiebbar ist, wodurch das zu transportierende Bauteil 17 in vertikaler Richtung positioniert werden kann. Dabei kann es insbesondere vorteilhaft sein, wenn die beiden Laufwagen 23 der beiden Hubmasten 19, 20 synchron zueinander gehoben bzw. gesenkt werden können.

Weiters kann vorgesehen sein, dass das Fahrzeug 1 einen Gabelhalter 24 umfasst, wobei der Gabelhalter 24 an einer ersten Seite 25 mit der ersten Gabelhalteraufnahme 21 gekoppelt sein kann und die zweite Seite 26 des Gabelhalters 24 mit der zweiten Gabelhalteraufnahme 22 gekoppelt sein kann. Die Verbindung zwischen Gabelhalteraufnahme 21, 22 und Gabelhalter 24 kann insbesondere in Form einer lösbaren Verbindung ausgebildet sein, sodass der Gabelhalter 24 einfach von den Hubmasten 19, 20 entkoppelt werden kann.

Weiters kann vorgesehen sein, dass am Gabelhalter 24 eine oder mehrere Traggabel 27 aufgenommen sind, wobei die Traggabeln 27 in Längsrichtung 8 verschiebbar am Gabelhalter 24 aufgenommen sein können. Dadurch kann der Abstand zwischen zwei nebeneinander angeordneten Traggabeln 27 variiert werden. Die Traggabeln 27 können in Form von herkömmlichen Staplergabeln ausgebildet sein. In einer Alternativvariante ist es auch möglich, dass die Traggabeln 27 eine andere Form aufweisen, um verschiedenartige Bauteile 17 befördern zu können.

Ferner kann vorgesehen sein, dass zwischen den beiden Hubmasten 19, 20 eine Verstrebung 28 ausgebildet ist, wobei durch die Verstrebung 28 die beiden Hubmasten 19, 20 relativ zueinander abgestützt werden können, wodurch die Steifigkeit der Hubeinrichtung 2 bzw. des kompletten Fahrzeuges 1 erhöht werden kann. Wie aus Fig. 4 gut ersichtlich, kann vorgesehen sein, dass die Hubeinrichtung 2 durch die beiden Hubmasten 19, 20 und die Verstrebung 28 zu einer Einheit gebildet ist. Die Verstrebung 28 kann durch einfache Formprofile gebildet sein, welche zwischen den beiden Hubmasten 19, 20 angeordnet sind. Weiters ist es auch denkbar, dass die Verstrebung 28 beispielswiese in Form eines Fachwerkes ausgeführt ist. Vorteilhaft kann insbesondere sein, wenn zwei Streben der Verstrebung 28 einen möglichst großen Abstand zueinander aufweisen, wobei eine erste Strebe insbesondere mit dem unteren Ende der Hubmasten 19, 20 verbunden ist und eine zweite Strebe mit dem oberen Ende der Hubmasten 19, 20 verbunden ist. Dadurch kann die versteifende Wirkung der Verstrebung 28 erhöht werden.

Wie besonders gut aus einer Zusammenschau der Figuren 1 und 4 ersichtlich, ist die Hubeinrichtung 2, welche den ersten Hubmast 19 und den zweiten Hubmast 20 umfasst, im Freiraum 6 des Fahrzeuges 1 aufgenommen. Dabei ist es vorgesehen, dass an einer ersten Seite 29 des ersten Hubmastes 19 eine erste Führungseinheit 30 angeordnet ist und an einer zweiten Seite 31 des zweiten Hubmastes 20 eine zweite Führungseinheit 32 angeordnet ist. Die Führungseinheiten 30, 32 dienen dazu, um die Hubmasten 19, 20 in Querrichtung 9 des Fahrzeuges 1 verschiebbar im Freiraum 6 aufnehmen zu können. Dadurch können die Traggabeln 27 und somit das zu transportierende Bauteil 17 in Querrichtung 9 seitlich aus dem Fahrzeug 1 ausgeschoben werden.

Weiters kann vorgesehen sein, dass die Verstrebung 28 mit einer zweiten Seite 33 des ersten Hubmastes 19 bzw. mit einer ersten Seite 34 des zweiten Hubmastes 20 verbunden sind. Die Verbindung zwischen Verstrebung 28 und Hubmasten 19, 20 kann insbesondere in Form einer Schweißverbindung ausgeführt sein.

Alternativ kann auch vorgesehen sein, dass die Verstrebung 28 mittels einem Befestigungsmittel mit den Hubmasten 19, 20 verbunden ist.

Weiters ist es vorgesehen, dass die beiden Führungseinheiten 30, 32 jeweils zwei Hauptführungsrollen 35 aufweisen, wobei diese derart an der Hubeinrichtung 2 angeordnet sind, dass eine Rotationsachse 36 der Hauptführungsrollen 35 in Längsrichtung 8 des Fahrzeuges 1 ausgerichtet ist. Bevorzugt sind die beiden Hauptführungsrollen 35 einer Führungseinheit 30, 32 beabstandet zueinander angeordnet. Dadurch kann neben einer vertikal wirkenden Kraft auch ein auf die Hubmasten 19, 20 wirkendes Drehmoment, welche aufgrund der Masse des zu transportierenden Bauteils 17 aufgebracht werden, von den Hauptführungsrollen 35 aufgenommen werden.

Dabei ist vorgesehen, dass die Hauptführungsrollen 35 mit einer Führungsschiene 37 zusammenwirken, welche im ersten Achsträger 3 bzw. im zweiten Achsträger 4 ausgebildet ist.

Weiters kann vorgesehen sein, dass zwei Antriebseinheiten 38 ausgebildet sind, welche zur Verstellung der Hubmasten 19, 20 in Querrichtung 9 des Fahrzeuges 1 dienen. Die Antriebseinheiten 38 können insbesondere im Nahbereich der Achsträger 3, 4 angeordnet sein, sodass die beiden Antriebseinheiten 38 einen möglichst großen Abstand zueinander aufweisen. Dadurch kann erreicht werden, dass die Hubeinrichtung 2 eine hohe Stabilität aufweist. Die Antriebseinheit 38 kann beispielsweise einen Hydraulikzylinder 39 umfassen, welcher dazu ausgebildet ist, um die Hubmasten 19, 20 in Querrichtung 9 verschieben zu können. Vorzugsweise kann dabei vorgesehen sein, dass die beiden Antriebseinheiten 38 synchron zueinander geschalten sind, um einen gleichmäßigen Ausschub der beiden Hubmasten 19, 20 zu erreichen.

In einer Alternativvariante kann vorgesehen sein, dass die Antriebseinheit 38 einen Stellmotor mit einem Zugmittel, wie etwa einem Zahnriemen oder einer Kette umfasst, wobei die beiden Hubmasten 19, 20 mit dem Zugmittel gekoppelt sind, wodurch die Verstellmöglichkeit der Hubeinrichtung 2 erreicht werden kann. In wieder einer anderen Ausführungsvariante kann vorgesehen sein, dass die Antriebseinheit 38 beispielsweise eine Stellspindel, wie etwa eine Gewindespindel, aufweist.

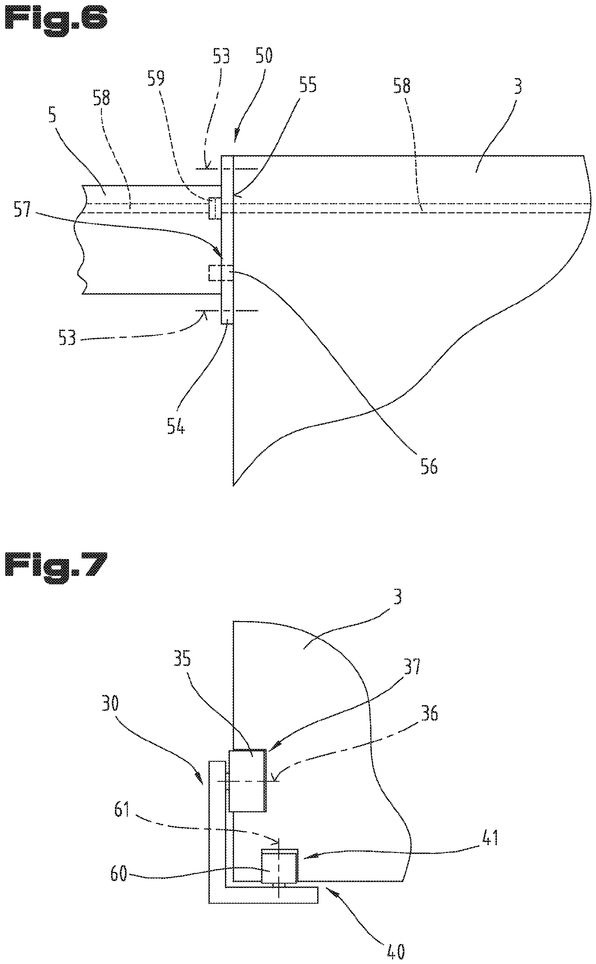

Weiters ist es vorgesehen, dass die erste Führungseinheit 30 bzw. die zweite Führungseinheit 32 ein Stabilisationsmodul 40 aufweist, welches zur Führung bzw. zur Positionierung der Hauptführungsrollen 35 in Längsrichtung 8 des Fahrzeuges 1 dient. Das Stabilisationsmodul 40 kann insbesondere mit einer Stabilisationsschiene 41 zusammenwirken, welche im ersten Achsträger 3 bzw. im zweiten Achsträger 4 angeordnet sein kann. Insbesondere kann vorgesehen sein, dass das Stabilisationsmodul 40 ein oder mehrere Gleitelemente 42 umfasst, welche in der Stabilisationsführungsschiene 41 aufgenommen sind und dadurch die Gleitführung des Stabilisationsmodules 40 in der Stabilisationsführungsschiene 41 erreicht werden kann. Eine weitere Ausführungsmöglichkeit des Stabilisationsmodules 40 ist in Fig. 7 dargestellt.

Das Stabilisationsmodul 40 kann zusätzlich dazu dienen, um die Steifigkeit des Fahrzeuges 1 zu erhöhen.

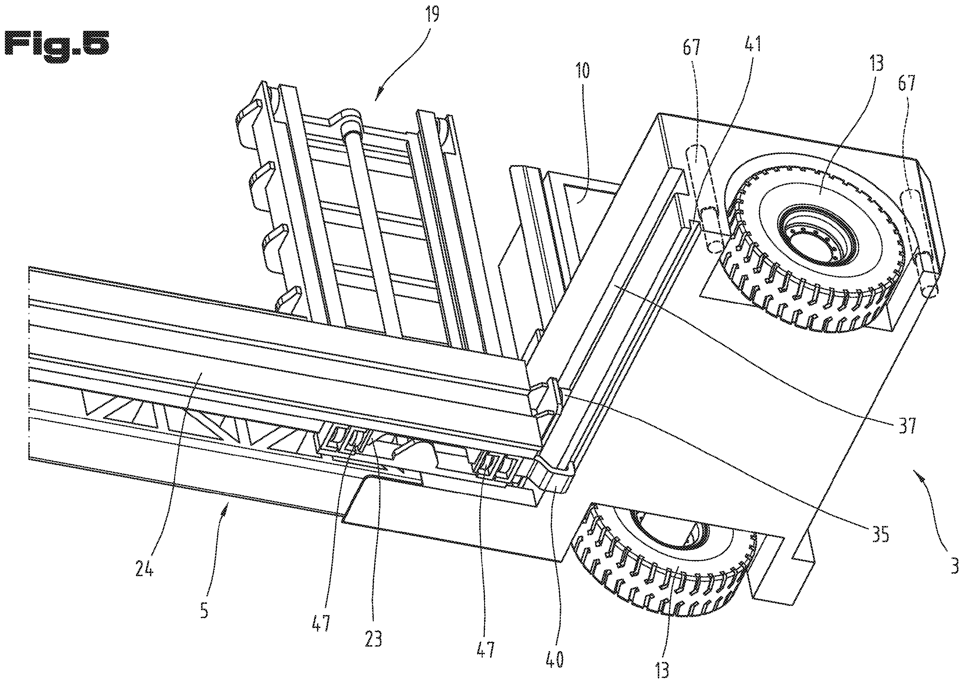

Weiters kann, wie in Fig. 5 ersichtlich, optional vorgesehen sein, dass am ersten Achsträger 3 und/oder am zweiten Achsträger 4 zumindest eine ausfahrbare Stütze 67 angeordnet ist. Von Vorteil ist es, wenn die Stütze 67 nahe einer Längsseite des Achsträgers 3, 4 und nahe dem Freiraum 6 angeordnet ist. Um den Betrieb des Fahrzeuges 1 in engen Regalgängen nicht zu stören kann vorgesehen sein, dass die Stütze 67 innerhalb der Breite 18 des Fahrzeuges 1 angeordnet ist. Die Stütze 67 ist vorzugsweise an jener Seite des Fahrzeuges 1 angeordnet, an welcher der Freiraum 6 ausgebildet ist. Weiters kann vorgesehen sein, dass an einer Seite des Fahrzeuges 1 pro Achsträger 3, 4 zwei Stützen 67 ausgebildet sind, wobei jeweils vor und hinter dem Rad eine der Stützen 67 angeordnet sein kann.

In einer weiteren, nicht dargestellten Ausführungsvariante kann vorgesehen sein, dass zusätzlich zu der Stütze 67, welche an jener Seite des Fahrzeuges 1 angeordnet ist, an welcher der Freiraum 6 ausgebildet ist, auch an der gegenüberliegenden Seite des Fahrzeuges 1 zumindest eine Stütze 67 angeordnet ist. Dies kann ebenfalls bei beiden Achsträgern 3, 4 der Fall sein.

Wie besonders gut aus einer Zusammenschau der Fig. 1 und 3 ersichtlich, kann vorgesehen sein, dass die beiden Hubmasten 19, 20 jeweils ein teleskopierbares Laufschienensystem 43 aufweisen, wodurch der Laufwagen 23 in vertikaler Richtung verstellbar ist. Insbesondere ist vorgesehen, dass die beiden Hubmasten 19, 20 derart angesteuert sind, dass die Laufwagen 23 der beiden Hubmasten 19, 20 synchron zueinander bewegt werden. Das Laufschienensystem 43 kann ein erstes Schienenpaar 44 aufweisen, welches direkt nächstliegend zum Laufwagen 22 angeordnet sind. Das erste Schienenpaar 44 kann zwei Einzelschienen 45 aufweisen, welche U-förmig ausgebildet sind und an einem offenen Ende 46 des U zur Aufnahme einer Führungsrolle 47 des Laufwagens 23 ausgebildet sind.

Insbesondere ist vorgesehen, dass am Laufwagen 23 beidseitig jeweils zwei Führungsrollen 47 ausgebildet sind, welche zur Lastaufnahme und zur Momentenaufnahme im Laufwagen 23 dienen. Weiters kann vorgesehen sein, dass das erste Schienenpaar 44 ebenfalls über Führungsrollen in einem zweiten Schienenpaar 48 verschiebbar aufgenommen ist. Dadurch kann die Teleskopfunktion des Hubmastens 19, 20 erreicht werden.

Weiters kann vorgesehen sein, dass die beiden Achsträger 3, 4 und die Verbindungskonstruktion 5 modular aufgebaut sind und jeweils als eigene Bauteilgruppe ausgebildet sind.

Insbesondere kann eine erste Seite 49 der Verbindungskonstruktion 5 mit dem ersten Achsträger 3 gekoppelt sein, wodurch eine erste Verbindungsstelle 50 ausgebildet ist. Weiters kann eine zweite Seite 51 der Verbindungskonstruktion 5 mit dem zweiten Achsträger 4 gekoppelt sein, wodurch eine zweite Verbindungsstelle 52 ausgebildet ist. Die Verbindungsstellen 50, 52 können durch eine stoffschlüssige Verbindung, insbesondere eine Fügeverbindung wie etwa eine Schweißverbindung, ausgebildet sein.

In einer weiteren Ausführungsvariante ist es auch denkbar, dass die Verbindungsstellen 50, 52 dadurch gebildet sind, dass der erste Achsträger 3 und/oder der zweite Achsträger 4 durch Befestigungsmittel 53 mit der Verbindungskonstruktion 5 gekoppelt sind. Derartige Befestigungsmittel 53 können beispielsweise Schrauben sein.

In der Fig. 6 ist eine weitere und gegebenenfalls für sich eigenständige Ausführungsform der ersten Verbindungsstelle 50 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Fig. 6 zeigt eine schematische Darstellung der ersten Verbindungsstelle 50 zwischen ersten Achsträger 3 und Verbindungskonstruktion 5. Die zweite Verbindungsstelle 52 kann analog zu dieser Darstellung bzw. zu dieser Beschreibung ausgebildet sein. Der kürze halber wird die zweite Verbindungsstelle 52 nicht gesondert beschrieben, sondern wird davon ausgegangen, dass es im Können des Fachmannes liegt die Analogien der ersten Verbindungsstelle 50 und der zweiten Verbindungsstelle 52 auszubilden.

Wie aus Fig. 6 ersichtlich, kann vorgesehen sein, dass der erste Achsträger 3 mittels einem Befestigungsmittel 53 mit der Verbindungskonstruktion 5 verbunden ist. Insbesondere kann vorgesehen sein, dass an der Verbindungskonstruktion 5 eine Verbindungsplatte 54 ausgebildet ist, welche flanschartig ausgebildet ist und welche zur Aufnahme der Befestigungsmittel 54 dient. Die Befestigungsmittel 54 müssen dabei nicht im Außenbereich der Verbindungskonstruktion 5 angeordnet sein, sondern ist es auch denkbar, dass die Befestigungsmittel 54 verborgen im Innenbereich der Verbindungskonstruktion 5 angeordnet sind.

Weiters kann vorgesehen sein, dass durch die Verbindungsplatte 54 eine Verbindungsebene 55 ausgebildet ist, welche eine klare Trennebene zwischen Verbindungskonstruktion 5 und erstem Achsträger 3 darstellt. Eine derartige Verbindungsebene 55 kann auch bei einer Schweißkonstruktion bzw. bei einer einfachen Rahmenkonstruktion ohne einer Verbindungsplatte 54 ausgebildet sein.

Weiters kann vorgesehen sein, dass beispielsweise am ersten Achsträger 3 ein Zentrierbolzen 56 ausgebildet ist, welcher mit einer Bolzenaufnahme 57 zusammenwirkt. Die Bolzenaufnahme 57 kann hierbei in der Verbindungskonstruktion 5, insbesondere in der Verbindungsplatte 54, ausgebildet sein. Alternativ dazu ist es auch denkbar, dass der Zentrierbolzen 56 an der Verbindungskonstruktion 5 und die Bolzenaufnahme 57 am ersten Achsträger 3 ausgebildet ist.

Weiters kann vorgesehen sein, dass in der Verbindungskonstruktion 5 Versorgungsleitungen 58 ausgebildet sind, welche insbesondere als Stromleitungen oder als Hydraulikleitungen ausgebildet sein können. Die Versorgungsleitungen 58 können im Bereich der Verbindungsstelle 50 mittels einer Kupplung 59 miteinander gekoppelt sein.

In der Fig. 7 ist eine weitere und gegebenenfalls für sich eigenständige Ausführungsform der Verbindung zwischen erster Führungseinheit 30 und erstem Achsträger 3 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen. Da die Verbindung zwischen zweiter Führungseinheit 32 und zweitem Achsträger 4 gleich aufgebaut sein kann, wird diese nicht gesondert beschrieben.

Wie aus Fig. 7 ersichtlich, kann vorgesehen sein, dass das Stabilisationsmodul 40 der Führungseinheit 30 eine Stabilisationsführungsrolle 60 aufweist, welche mit der Stabilisationsführungsschiene 41 zusammenwirkt. Insbesondere kann vorgesehen sein, dass die Stabilisationsführungsrolle 60 derart angeordnet ist, dass eine Rotationsachse 61 der Stabilisationsführungsrolle 60 im Wesentlichen vertikal stehend angeordnet ist.

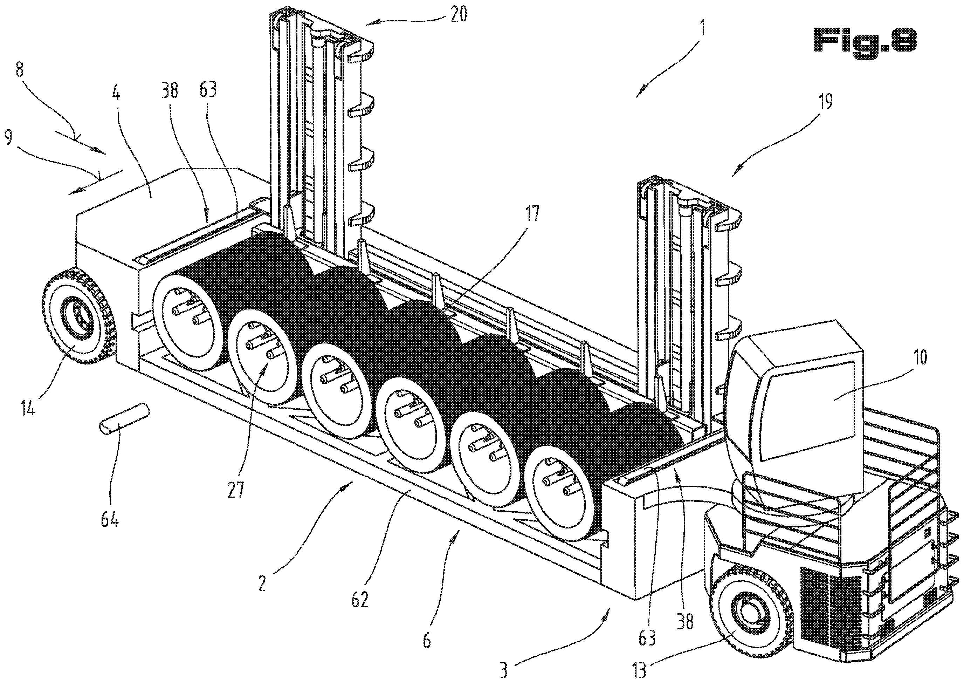

In der Fig. 8 ist eine weitere und gegebenenfalls für sich eigenständige Ausführungsform des Fahrzeuges 1 mit seitlicher Hubeinrichtung 2 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass im Freiraum 6 eine Bodenkonstruktion 62 ausgebildet ist, welche zur Stabilisierung bzw. zur Unterstützung der Verbindungskonstruktion 5 dient.

Weiters ist aus Fig. 8 ersichtlich, dass vorgesehen sein kann, dass als Antriebseinheit 38 zum Verstellen der Hubmasten 19, 20 in Querrichtung 9 ein Zugmittel 63 vorgesehen sein kann.

Darüber hinaus kann, wie aus Fig. 8 ersichtlich, die Fahrerkabine 10 mittig am Fahrzeug 1, insbesondere zentral bezüglich der Längsachse 7 des Fahrzeuges 1 am ersten Achsträger 3 angeordnet sein. Durch eine derartige Anordnung der Fahrerkabine 10 kann die Sicht des Maschinenbedieners auf das zu transportierende Bauteil 17 verbessert werden.

Weiters kann vorgesehen sein, dass die Fahrerkabine 10 drehbar am ersten Achsträger 3 angeordnet ist. Durch diese Maßnahme kann die Sicht des Maschinenbedieners auf das zu transportierende Bauteil 17 ebenfalls verbessert werden.

Weiters kann vorgesehen sein, dass das erste Radpaar 13 in Form eines Knicklenkers ausgebildet ist.

Weiters kann, wie in Fig. 8 ersichtlich, vorgesehen sein, dass für zu transportierende Bauteile 17, welche in Form von Spulen ausgebildet sind, spezielle Traggabeln 27 vorgesehen sind, welche zur Aufnahme der zu transportierenden Bauteile 17 dienen.

Die Traggabeln 27 sind insbesondere zum Zusammenwirken mit einem runden Dorn 64 eines Regales, welcher zur Aufnahme der Spule konzeptioniert ist, ausgebildet.

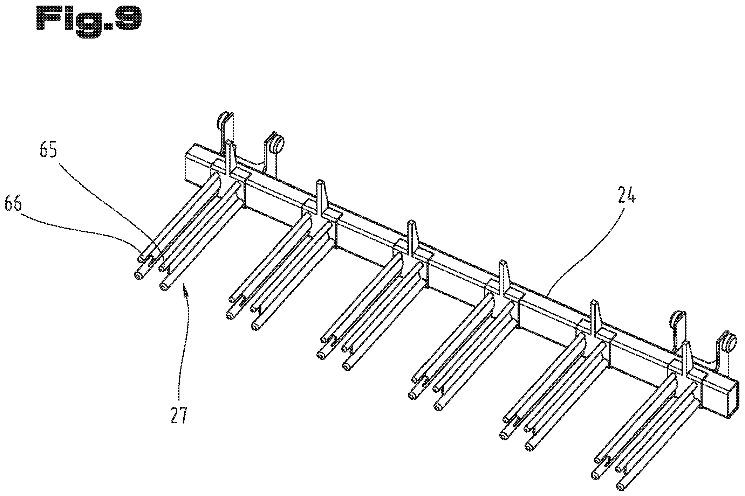

In der Fig. 9 ist eine weitere und gegebenenfalls für sich eigenständige Ausführungsform der Traggabel 27 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Insbesondere kann, wie aus Fig. 9 ersichtlich, vorgesehen sein, dass die Traggabel 27 eine erste Traggabelseite 65 und eine zweite Traggabelseite 66 aufweist, wobei der Dorn 64 beim Ablegen des Bauteils 17 im Regal zwischen den beiden Traggabelseiten 65, 66 eingeführt wird und beim anschließenden Absenken des Gabelhalters 24 die Last des Bauteils 17 von der Traggabel 27 auf den Dorn 64 übergeben wird.

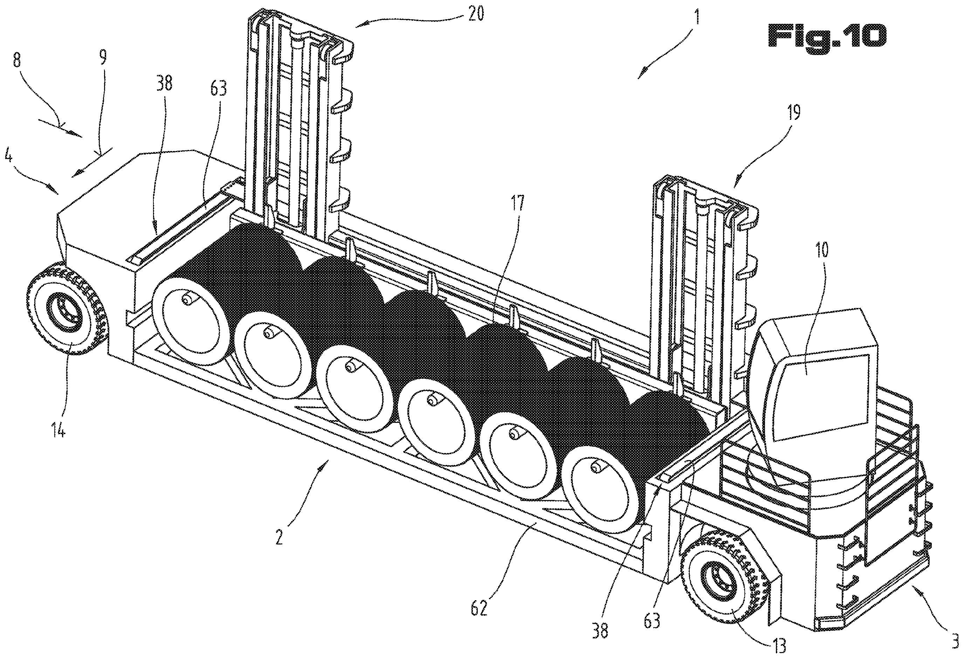

In der Fig. 10 ist eine weitere und gegebenenfalls für sich eigenständige Ausführungsform des Fahrzeuges 1 mit seitlicher Hubeinrichtung 2 gezeigt, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

Im Ausführungsbeispiel nach Fig. 10, ist ähnlich wie im Ausführungsbeispiel nach Fig. 1, das erste Radpaar 13 des ersten Achsträgers 3 gelenkt. Die Fahrerkabine 10 ist im Ausführungsbeispiel nach Fig. 10 mittig bezüglich der Längsachse 7 des Fahrzeuges 1 angeordnet, wobei die Fahrerkabine 10 ebenfalls drehbar ausgebildet sein kann, um die Sicht auf das zu transportierende Bauteil verbessern zu können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8, 1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fahrzeug | 30 | erste Führungseinheit |
| 2 | Hubeinrichtung | 31 | zweite Seite zweiter Hubmast |
| 3 | erster Achsträger | 32 | zweite Führungseinheit |
| 4 | zweiter Achsträger | 33 | zweite Seite erster Hubmast |
| 5 | Verbindungskonstruktion | 34 | erste Seite zweiter Hubmast |
| 6 | Freiraum | 35 | Hauptführungsrolle Führungseinheit |
| 7 | Längsachse Fahrzeug | | |
| 8 | Längsrichtung des Fahrzeuges | 36 | Rotationsachse Hauptführungsrolle |
| 9 | Querrichtung des Fahrzeuges | 37 | Führungsschiene Hauptführungsrolle |
| 10 | Fahrerkabine | | |
| 11 | Auflageebene | 38 | Antriebseinheit |
| 12 | Rand des Achsträgers | 39 | Hydraulikzylinder |
| 13 | erstes Radpaar erster Achsträger | 40 | Stabilisationsmodul |
| 14 | zweites Radpaar zweiter Achsträger | 41 | Stabilisationsführungsschiene |
| | | 42 | Gleitelement |
| 15 | Länge des Fahrzeuges | 43 | Laufschienensystem |
| 16 | lichte Länge | 44 | erstes Schienenpaar |
| 17 | zu transportierendes Bauteil | 45 | Einzelschiene erstes Schienenpaar |
| 18 | Breite Fahrzeug | 46 | offenes Ende Einzelschiene |
| 19 | erster Hubmast | 47 | Führungsrolle Laufwagen |
| 20 | zweiter Hubmast | 48 | zweites Schienenpaar |
| 21 | erste Gabelhalteraufnahme | 49 | erste Seite Verbindungskonstruktion |
| 22 | zweite Gabelhalteraufnahme | | |
| 23 | Laufwagen | 50 | erste Verbindungsstelle |
| 24 | Gabelhalter | 51 | zweite Seite Verbindungskonstruktion |
| 25 | erste Seite Gabelhalter | | |
| 26 | zweite Seite Gabelhalter | 52 | zweite Verbindungsstelle |
| 27 | Traggabel des Gabelhalters | 53 | Befestigungsmittel |
| 28 | Verstrebung | 54 | Verbindungsplatte |
| 29 | erste Seite erster Hubmast | 55 | Verbindungsebene |
| 56 | Zentrierbolzen | | |
| 57 | Bolzenaufnahme | | |
| 58 | Versorgungsleitungen | | |
| 59 | Kupplung | | |
| 60 | Stabilisationsführungsrolle | | |
| 61 | Rotationsachse Stabilisationsführungsrolle | | |
| 62 | Bodenkonstruktion | | |
| 63 | Zugmittel | | |
| 64 | Dorn | | |
| 65 | erste Traggabelseite | | |
| 66 | zweite Traggabelseite | | |
| 67 | Stütze | | |

## Patentansprüche

1. Fahrzeug (1) mit seitlicher Hubeinrichtung (2), umfassend zumindest einen ersten Achsträger (3) und einen zweiten Achsträger (4), wobei die beiden Achsträger (3, 4) mittels einer seitlich außermittig angeordneten Verbindungskonstruktion (5) miteinander gekoppelt sind und wobei die Hubeinrichtung (2) in einem Freiraum (6) zwischen den beiden Achsträgern (3, 4) angeordnet ist, wobei die Hubeinrichtung (2) zumindest einen ersten Hubmast (19) mit einer ersten vertikal verschiebbaren Gabelhalteraufnahme (21) und einen zweiten Hubmast (20) mit einer zweiten vertikal verschiebbaren Gabelhalteraufnahme (22) umfasst, wobei die beiden Hubmasten (19, 20) derart angesteuert sind, dass die Gabelhalteraufnahmen (21, 22) synchron zueinander verschiebbar sind, **dadurch gekennzeichnet, dass** der erste Hubmast (19) an einer dem ersten Achsträger (3) zugewandten ersten Seite (29) eine erste Führungseinheit (30) aufweist und dass der zweite Hubmast (20) an einer dem zweiten Achsträger (4) zugewandten zweiten Seite (31) eine zweite Führungseinheit (32) aufweist, wobei die beiden Führungseinheiten (30, 32) jeweils zumindest zwei horizontal zueinander beabstandete Hauptführungsrollen (35) mit horizontal ausgerichteter Rotationsachse (36) aufweisen, welche Hauptführungsrollen (35) jeweils mit einer in den Achsträgern (3, 4) angeordneten Führungsschiene (37) zusammenwirken, wobei die Hauptführungsrollen (35) zur Aufnahme der auf die Hubeinrichtung (2) wirkenden Last und des auf die Hubeinrichtung (2) wirkenden Drehmomentes ausgebildet sind, und dass die beiden Führungseinheiten (30, 32) jeweils zumindest ein in horizontaler Längsrichtung (8) des Fahrzeuges (1) wirkendes Stabilisationsmodul (40) aufweisen, welches zur horizontalen Positionierung der Hauptführungsrollen (35) in der Führungsschiene (37) dient.

2. Fahrzeug nach Anspruch 1, **dadurch gekennzeichnet, dass** die beiden Hubmasten (19, 20) horizontal in Querrichtung (9) des Fahrzeuges (1) verschiebbar sind.

3. Fahrzeug nach Anspruch 1 oder 2, **dadurch gekennzeichnet, dass** die beiden Hubmasten (19, 20) mittels einer Verstrebung (28) aneinander abgestützt sind.

4. Fahrzeug nach einem der vorhergehenden Ansprüche, **dadurch gekennzeichnet, dass** das Stabilisationsmodul (40) zumindest eine Stabilisationsführungsrolle (60) mit vertikal ausgerichteter Rotationsachse (61) aufweist, welche Stabilisationsführungsrolle (60) mit einer in den Achsträgern (3, 4) angeordneten Stabilisationsführungsschiene (41) zusammenwirkt.

5. Fahrzeug nach einem der vorhergehenden Ansprüche, **dadurch gekennzeichnet, dass** das Stabilisationsmodul (40) zwei Gleitelemente (42) aufweist, welche mit der in den Achsträgern (3, 4) angeordneten Stabilisationsführungsschiene (41) zusammenwirken.

6. Fahrzeug nach einem der einem der vorhergehenden Ansprüche, **dadurch gekennzeichnet, dass** zwei Antriebseinheiten (38) ausgebildet sind, welche zur horizontalen Verschiebung der Hubmasten (19, 20) in Querrichtung (9) des Fahrzeuges (1) dienen.

7. Fahrzeug nach Anspruch 6, **dadurch gekennzeichnet, dass** die Antriebseinheiten (38) jeweils zumindest einen Hydraulikzylinder (39) umfassen.

8. Fahrzeug nach einem der vorhergehenden Ansprüche, **dadurch gekennzeichnet, dass** ein Gabelhalter (24) ausgebildet ist, welcher an einer ersten Seite (25) mit der ersten Gabelhalteraufnahme (21) des ersten Hubmast (19) gekoppelt ist und an einer zweiten Seite (26) mit der zweiten Gabelhalteraufnahme (22) des zweiten Hubmast (20) gekoppelt ist.

9. Fahrzeug nach einem der vorhergehenden Ansprüche, **dadurch gekennzeichnet, dass** die beiden Hubmasten (19, 20) jeweils ein teleskopierbares Laufschienensystem (43) aufweisen, an welchem jeweils die Gabelhalteraufnahme (21, 22) angeordnet ist.

10. Fahrzeug nach Anspruch 9, **dadurch gekennzeichnet, dass** das teleskopierbare Laufschienensystem (43) des Hubmasten (19, 20) ein erstes Schienenpaar (44) mit zwei U-Förmig ausgebildeten Einzelschienen (45) umfasst, wobei die offenen Enden (46) der beiden U-Förmig ausgebildeten Einzelschienen (45) einander gegenüberliegend angeordnet sind und wobei die Gabelhalteraufnahme (21, 22) an einem Laufwagen (23) ausgebildet ist, welcher zumindest vier Führungsrollen (47) aufweist, wobei jeweils zwei Führungsrollen (47) paarweise in einer der U-Förmig ausgebildeten Einzelschienen (45) geführt sind und wobei die U-Förmig ausgebildeten Einzelschienen (45) in einem zweiten Schienenpaar (48) verschiebbar geführt sind.

11. Fahrzeug nach einem der vorhergehenden Ansprüche, **dadurch gekennzeichnet, dass** der erste Achsträger (3) ein erstes Radpaar (13) und der zweite Achsträger (4) ein zweites Radpaar (14) aufweist, wobei beide Radpaare (13, 14) lenkbar sind.

12. Fahrzeug nach einem der vorhergehenden Ansprüche, **dadurch gekennzeichnet, dass** die Verbindungskonstruktion (5) am seitlichen Rand (12) der Achsträger (3, 4) angeordnet ist, sodass das Fahrzeug (1) in Draufsicht U-Förmig ausgebildet ist, wobei die beiden parallel zueinander liegenden Schenkel des U-Förmig ausgebildeten Fahrzeuges (1) durch die Achsträger (3, 4) gebildet sind und der Freiraum (6) zur Aufnahme der Hubeinrichtung (2) an der offenen Seite der U-Förmigen Anordnung ausgebildet ist.

13. Fahrzeug nach einem der vorhergehenden Ansprüche, **dadurch gekennzeichnet, dass** die Verbindungskonstruktion (5) teleskopierbar ausgebildet ist, und dadurch eine Länge (15) des Fahrzeuges (1) variierbar ist.

14. Fahrzeug nach einem der vorhergehenden Ansprüche, **dadurch gekennzeichnet, dass** eine Fahrerkabine (10) ausgebildet ist, welche mittig bezüglich einer Längsachse (7) des Fahrzeuges (1) am ersten Achsträger (3) angeordnet ist.

15. Fahrzeug nach einem der vorhergehenden Ansprüche, **dadurch gekennzeichnet, dass** eine lichte Länge (16) des Freiraumes (6) zwischen 3m und 20m, insbesondere zwischen 4m und 18m, bevorzugt zwischen 7m und 15m beträgt.

16. Fahrzeug nach einem der vorhergehenden Ansprüche, **dadurch gekennzeichnet, dass** die beiden Achsträger (3, 4) und die Verbindungskonstruktion (5) modular aufgebaut und jeweils als eigene Bauteilgruppe ausgebildet sind, wobei die Verbindungskonstruktion (5) an einer ersten Seite (49) mit dem ersten Achsträger (3) gekoppelt ist, wodurch eine erste Verbindungsstelle (50) ausgebildet ist, und an einer zweiten Seite (51) mit dem zweiten Achsträger (4) gekoppelt ist, wodurch eine zweite Verbindungsstelle (52) ausgebildet ist.

17. Fahrzeug nach einem der vorhergehenden Ansprüche, **dadurch gekennzeichnet, dass** im Bereich der Verbindungskonstruktion (5) ein Sensor, insbesondere in Form von Dehnmessstreifen, angeordnet ist, welcher ein in die Verbindungskonstruktion (5) eingeleitetes Drehmoment erfasst, welches Drehmoment durch neigen eines der beiden Achsträger (3, 4) ausgleichbar ist.

18. Fahrzeug nach einem der vorhergehenden Ansprüche, **dadurch gekennzeichnet, dass** am ersten Achsträger (3) und/oder am zweiten Achsträger (4) zumindest eine ausfahrbare Stütze (67) angeordnet ist, wobei die Stütze (67) insbesondere nahe einer Längsseite des Achsträgers (3, 4) und nahe dem Freiraum (6) angeordnet ist.

## Claims

1. A vehicle (1) having a lateral lifting device (2), comprising at least one first axle carrier (3) and one second axle carrier (4), wherein the two axle carriers (3, 4) are coupled to one another by means of a laterally eccentrically arranged connecting structure (5) and wherein the lifting device (2) is arranged in a free space (6) between the two axle carriers (3, 4), wherein the lifting device (2) comprises at least one first lifting mast (19) with a first vertically displaceable fork holder receptacle (21) and one second lifting mast (20) with a second vertically displaceable fork holder receptacle (22), wherein the two lifting masts (19, 20) are controlled such that the fork holder receptacles (21, 22) can be displaced synchronously with one another, **characterized in that** the first lifting mast (19) has a first guide unit (30) on a first side (29) facing the first axle carrier (3) and that the second lifting mast (20) has a second guide unit (32) on a second side (31) facing the second axle carrier (4), wherein the two guide units (30, 32) each have at least two main guide rollers (35) which are horizontally spaced apart from one another and have a horizontally oriented axis of rotation (36), said main guide rollers (35) each cooperating with a guide rail (37) which is arranged in the axle carriers (3, 4), wherein the main guide rollers (35) are designed to accommodate the load acting on the lifting device (2) and the torque acting on the lifting device (2), and that the two guide units (30, 32) each have at least one stabilization module (40) which acts in the horizontal longitudinal direction (8) of the vehicle (1) and which serves to position the main guide rollers (35) horizontally in the guide rail (37).

2. The vehicle according to claim 1, **characterized in that** the two lifting masts (19, 20) are horizontally displaceable in the transverse direction (9) of the vehicle (1).

3. The vehicle according to claim 1 or 2, **characterized in that** the two lifting masts (19, 20) are supported on one another by means of a brace (28).

4. The vehicle according to one of the preceding claims, **characterized in that** the stabilization module (40) comprises at least one stabilization guide roller (60) with a vertically oriented axis of rotation (61), said stabilization guide roller (60) cooperating with a stabilization guide rail (41) arranged in the axle carriers (3, 4).

5. The vehicle according to one of the preceding claims, **characterized in that** the stabilization module (40) comprises two sliding elements (42) cooperating with the stabilization guide rail (41) arranged in the axle carriers (3, 4).

6. The vehicle according to one of the preceding claims, **characterized in that** two drive units (38) are formed, which serve for horizontal displacement of the lifting masts (19, 20) in the transverse direction (9) of the vehicle (1).

7. The vehicle according to claim 6, **characterized in that** the drive units (38) each comprise at least one hydraulic cylinder (39).

8. The vehicle according to one of the preceding claims, **characterized in that** a fork holder (24) is formed, which is coupled to the first fork holder receptacle (21) of the first lifting mast (19) on a first side (25) and which is coupled to the second fork holder receptacle (22) of the second lifting mast (20) on a second side (26).

9. The vehicle according to one of the preceding claims, **characterized in that** the two lifting masts (19, 20) each comprise a telescopic running rail system (43) on which the fork holder receptacle (21, 22) is respectively arranged.

10. The vehicle according to claim 9, **characterized in that** the telescopic running rail system (43) of the lifting mast (19, 20) comprises a first rail pair (44) with two U-shaped single rails (45), wherein the open ends (46) of the two U-shaped single rails (45) are arranged opposite to one another and wherein the fork holder receptacle (21, 22) is formed on a carriage (23) comprising at least four guide rollers (47), wherein, in each case, two guide rollers (47) are guided in pairs in one of the U-shaped single rails (45) and wherein the U-shaped single rails (45) are displaceably guided in a second rail pair (48).

11. The vehicle according to one of the preceding claims, **characterized in that** the first axle carrier (3) comprises a first pair of wheels (13) and the second axle carrier (4) comprises a second pair of wheels (14), wherein both pairs of wheels (13, 14) can be steered.

12. The vehicle according to one of the preceding claims, **characterized in that** the connecting structure (5) is arranged on the lateral edge (12) of the axle carriers (3, 4), such that the vehicle (1) is U-shaped as seen in a plan view, wherein the two parallel legs of the U-shaped vehicle (1) are formed by the axle carriers (3, 4) and the free space (6) is formed for receiving the lifting device (2) on the open side of the U-shaped arrangement.

13. The vehicle according to one of the preceding claims, **characterized in that** the connecting structure (5) is formed to be telescopic, and a length (15) of the vehicle (1) can hence be varied.

14. The vehicle according to one of the preceding claims, **characterized in that** a driver's cabin (10) is formed, which is arranged on the first axle carrier (3) centrally with respect to a longitudinal axis (7) of the vehicle (1).

15. The vehicle according to one of the preceding claims, **characterized in that** a clear length (16) of the free space (6) amounts to between 3 m and 20 m, in particular between 4 m and 18 m, preferably between 7 m and 15 m.

16. The vehicle according to one of the preceding claims, **characterized in that** the two axle carriers (3, 4) and the connecting structure (5) are structured modularly and are, in each case, formed as an individual component assembly, wherein the connecting structure (5) is coupled to the first axle carrier (3) on a first side (49), whereby a first connecting point (50) is formed, and is coupled to the second axle carrier (4) on a second side (51), whereby a second connecting point (52) is formed.

17. The vehicle according to one of the preceding claims, **characterized in that** a sensor, in particular in the form of strain gauges, is arranged in the region of the connecting structure (5), said sensor detecting a torque introduced into the connecting structure (5), which torque can be compensated for by tilting one of the two axle carriers (3, 4).

18. The vehicle according to one of the preceding claims, **characterized in that** at least one extendable pillar (67) is arranged on the first axle carrier (3) and/or on the second axle carrier (4), wherein the pillar (67) is in particular arranged close to a longitudinal side of the axle carrier (3, 4) and close to the free space (6).

## Revendications

1. Véhicule (1) avec dispositif de levage latéral (2), comprenant au moins un premier support d'essieu (3) et un deuxième support d'essieu (4), les deux supports d'essieux (3, 4) étant couplés entre eux au moins d'une structure de liaison (5) disposée latéralement de manière excentrée et le dispositif de levage (2) étant disposé dans un espace libre (6) entre les deux supports d'essieux (3, 4), le dispositif de levage (2) comprenant au moins un premier mât de levage (19) avec un premier logement de support de fourche (21) coulissant verticalement et un deuxième mât de levage (20) avec un deuxième logement de support de fourche (22), les deux mâts de levage (19, 20) étant contrôlés de façon à ce que les logements de supports de fourches (21, 22) puissent coulisser de manière synchrone entre eux, **caractérisé en ce que** le premier mât de levage (19) comprend, sur un premier côté (29), orienté vers le premier support d'essieu (3), une première unité de guidage (30) et **en ce que** le deuxième mât de levage (20) comprend, sur un deuxième côté (31), orienté vers le deuxième support d'essieu (4), une deuxième unité de guidage (32), les deux unités de guidage (30, 32) comprenant chacune au moins deux galets de guidage principaux (35) distants entre eux dans le sens horizontal, avec un axe de rotation (36) horizontal, ces galets de guidage principaux (35) interagissant chacun avec un rail de guidage (37) disposé dans les supports d'essieux (3, 4), les galets de guidage principaux (35) étant conçus pour l'absorption de la charge agissant sur le dispositif de levage (2) et **en ce que** les deux unités de guidage (30, 32) comprennent chacune au moins un module de stabilisation (40) agissant dans la direction longitudinale horizontale (8) du véhicule (1), qui permet le positionnement horizontal des galets de guidage principaux (35) dans le rail de guidage (37).

2. Véhicule selon la revendication 1, **caractérisé en ce que** les deux mâts de levage (19, 20) peuvent coulisser horizontalement dans la direction transversale (9) du véhicule (1).

3. Véhicule selon la revendication 1 ou 2, **caractérisé en ce que** les deux mâts de levage (19, 20) sont appuyés l'un contre l'autre au moyen d'une entretoise (28).

4. Véhicule selon l'une des revendications précédentes, **caractérisé en ce que** le module de stabilisation (40) comprend au moins un galet de guidage de stabilisation (60) avec un axe de rotation vertical (61), ce galet de guidage de stabilisation (60) interagissant avec un rail de guidage de stabilisation (41) disposé dans les supports d'essieux (3, 4).

5. Véhicule selon l'une des revendications précédentes, **caractérisé en ce que** le module de stabilisation (40) comprend deux éléments de glissement (42) qui interagissent avec le rail de guidage de stabilisation (41) disposé dans les supports d'essieux (3, 4).

6. Véhicule selon l'une des revendications précédentes, **caractérisé en ce que** deux unités d'entraînement (38) sont prévues, qui permettent le coulissement horizontal des mâts de levage (19, 20) dans la direction transversale (9) du véhicule (1).

7. Véhicule selon la revendication 6, **caractérisé en ce que** les unités d'entraînement (38) comprennent chacune au moins un vérin hydraulique (39).

8. Véhicule selon l'une des revendications précédentes, **caractérisé en ce qu'**un support de fourche (24) est prévu, qui est couplé, au niveau d'un premier côté (25), avec le premier logement de support de fourche (21) du premier mât de levage (19) et, au niveau d'un deuxième côté (26), avec le deuxième logement de support de fourche (22) du deuxième mât de levage (20).

9. Véhicule selon l'une des revendications précédentes, **caractérisé en ce que** les deux mâts de levage (19, 20) comprennent chacun un système de rails de roulement télescopique (43) sur lequel est disposé le logement de support de fourche (21, 22).

10. Véhicule selon la revendication 9, **caractérisé en ce que** le système de rails de roulement télescopique (43) du mât de levage (19, 20) comprend une première paire de rails (44) avec deux rails individuels (45) en forme de U, les extrémités ouvertes (46) des deux rails individuels (45) en forme de U étant disposées l'une en face de l'autre et le logement de support de fourche (21, 22) étant disposée sur un chariot (23) qui comprend au moins quatre galets de guidage (47), deux galets de guidage (47) étant guidés respectivement par paires dans un des rails individuels (45) en forme de U et les rails individuels (45) en forme de U étant guidés de manière coulissant dans une deuxième paire de rails (48).

11. Véhicule selon l'une des revendications précédentes, **caractérisé en ce que** le premier support d'essieu (3) comprend une première paire de roues (13) et le deuxième support d'essieu (4) comprend une deuxième paire de roues (14), les deux paires de roues (13, 14) étant directrices.

12. Véhicule selon l'une des revendications précédentes, **caractérisé en ce que** la structure de liaison (5) est disposé sur le bord latéral (12) des supports d'essieux (3, 4), de façon à ce que le véhicule (1) présente une forme de U en vue de dessus, les deux branches, parallèles entre elles, du véhicule (1) en forme de U étant constituées par des supports d'essieux (3, 4) et l'espace libre (6) permettant le logement du dispositif de levage (2) sur le côté ouverte de la disposition en forme de U.

13. Véhicule selon l'une des revendications précédentes, **caractérisé en ce que** la structure de liaison (5) est conçue de manière télescopique et une longueur (15) du véhicule (1) est donc variable.

14. Véhicule selon l'une des revendications précédentes, **caractérisé en ce qu'**une cabine de conducteur (10) est prévue, qui est disposée au centre par rapport à un axe longitudinal (7) du véhicule (1) sur le premier support d'essieu (3).

15. Véhicule selon l'une des revendications précédentes, **caractérisé en ce qu'**une longueur hors tout (16) de l'espace libre (6) est entre 3 m et 20 m, plus particulièrement entre 4 m et 18 m, de préférence entre 7 m et 15 m.

16. Véhicule selon l'une des revendications précédentes, **caractérisé en ce que** les deux supports d'essieux (3, 4) et la structure de liaison (5) sont conçus de manière modulaire et sont conçus chacun comme un sousensemble, la structure de liaison (5) étant couplée, au niveau d'un premier côté (49), avec le premier support d'essieu (3), ce qui permet de réaliser un premier point de liaison (50) et, au niveau d'un deuxième côté (51), avec le deuxième support d'essieu (4), ce qui permet de réaliser un deuxième point de liaison (52).

17. Véhicule selon l'une des revendications précédentes, **caractérisé en ce que**, au niveau de la structure de liaison (5), est disposé un capteur, plus particulièrement sous la forme d'une jauge de contrainte, qui mesure un couple appliqué à la structure de liaison (5), ce couple pouvant être compensé par l'inclinaison d'un des deux supports d'essieux (3, 4).

18. Véhicule selon l'une des revendications précédentes, **caractérisé en ce que**, au niveau du premier support d'essieu (3) et/ou au niveau du deuxième support d'essieu (4), est disposé au moins une béquille déployable (67), la béquille (67) étant disposée plus particulièrement à proximité d'un côté longitudinal du support d'essieu (3, 4) et à proximité de l'espace libre (6).
